(19) Europäisches Patentamt
European Patent Office
Office européen des brevets

(11) EP 3 333 956 B1

(12) # FASCICULE DE BREVET EUROPEEN

(45) Date de publication et mention de la délivrance du brevet:
**15.05.2019 Bulletin 2019/20**

(21) Numéro de dépôt: **17205268.0**

(22) Date de dépôt: **04.12.2017**

(51) Int Cl.:
***H01M 10/052*** *(2010.01)* ***H01M 10/42*** *(2006.01)*
***H01M 2/14*** *(2006.01)* ***H01M 2/16*** *(2006.01)*

(54) **ACCUMULATEUR ELECTROCHIMIQUE METAL-ION, COMPRENANT UN SEPARATEUR REGENERATEUR DE CAPACITE, PROCEDES DE REALISATION DE SEPARATEUR ASSOCIES**

ELEKTROCHEMISCHEN LITHIUMBATTERIE MIT EINEM KAPAZITÄTSREGENERATOR-SEPARATOR UND VERFAHREN ZUR HERSTELLUNG DES SEPARATORS

ELECTROCHEMICAL LITHIUM BATTERY COMPRISING A CAPACITY REGENERATOR SEPARATOR AND METHOD FOR PREPARING THE SEPARATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2016 FR 1661992**

(43) Date de publication de la demande:
**13.06.2018 Bulletin 2018/24**

(73) Titulaire: **Commissariat à l'Energie Atomique et aux Energies Alternatives**
**75015 Paris (FR)**

(72) Inventeurs:
- **BRUN-BUISSON, David**
  **38470 VATILIEU (FR)**
- **DUCROS, Jean-Baptiste**
  **38600 FONTAINE (FR)**
- **IORDACHE, Adriana**
  **38000 GRENOBLE (FR)**
- **SOLAN, Sébastien**
  **38170 SEYSSINET-PARISET (FR)**

(74) Mandataire: **Nony**
**11 rue Saint-Georges**
**75009 Paris (FR)**

(56) Documents cités:
**FR-A1- 3 017 248** **US-A1- 2007 190 408**
**US-A1- 2009 111 025** **US-A1- 2012 295 149**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 333 956 B1

## Description

### Domaine technique

La présente invention concerne le domaine des générateurs électrochimiques métal-ion, qui fonctionnent selon le principe d'insertion ou de désinsertion, ou autrement dit intercalation-désintercalation, d'ion métal dans au moins une électrode.

Elle concerne plus particulièrement un accumulateur électrochimique au lithium, de type Li-ion, comportant au moins une cellule électrochimique constituée d'une anode (électrode négative) et d'une cathode (électrode positive) de part et d'autre d'un séparateur imprégné d'électrolyte, la cellule étant enroulée sur elle-même autour d'un axe d'enroulement, deux collecteurs de courant dont un est relié à l'anode et l'autre à la cathode, et un boitier agencé pour loger la cellule électrochimique enroulée avec étanchéité tout en étant traversée par une partie des collecteurs de courant formant les bornes de sortie, aussi appelés pôles.

L'invention vise à proposer une méthode et des moyens associés de régénération de la capacité des générateurs électrochimiques.

Par « régénération de capacité », on entend ici et dans le cadre de l'invention, la récupération de la capacité perdue d'un accumulateur dimensionnée initialement avec les matériaux des électrodes de la (des) cellule(s) qui le constitue(nt), c'est-à-dire du niveau de courant initial pouvant être extrait en une période de temps donnée.

Bien que décrite en référence à un accumulateur Lithium-ion, l'invention peut s'appliquer à tout accumulateur électrochimique métal-ion, c'est-à-dire également Sodium-ion, Magnésium-ion, Aluminium-ion...

### Etat de la technique

Telle qu'illustrée schématiquement en figures 1 et 2, une batterie ou accumulateur lithium-ion A comporte usuellement au moins une cellule électrochimique constituée d'un séparateur imprégné d'un constituant électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5, formant les bornes de sortie.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :

- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel.

Sous ces deux dernières formes, le constituant peut comprendre un séparateur, sous la forme d'un ou plusieurs films, en polymère ou en composite microporeux, imbibé d'électrolyte (s) organique (s) ou de type liquide ionique qui permet le déplacement des ions Lithium de la cathode à l'anode pour une charge et inversement pour une décharge, ce qui génère le courant.

Le séparateur 1 est un matériau passif qui n'intervient pas directement dans les processus de charge/décharge de l'accumulateur et qui est inerte aussi bien chimiquement qu'électrochimiquement. Les séparateurs actuellement commercialisés sont principalement des membranes microporeuses en polyoléfine, par exemple en polyéthylène (PE) ou en polypropylène(PP). Cependant, d'autres matériaux peuvent être utilisés pour constituer le séparateur. On peut citer le polyacrylonitrile (PAN), l'alcool polyvinylique (PVA), le polyimide, la cellulose, les fibres de verre, etc., ainsi que des mélanges de ceux-ci. Ils peuvent être constitués d'une ou plusieurs films ou couches. Leur épaisseur totale varie classiquement entre 12 et 30 $\mu$m, en fonction des applications visées.

Un séparateur, particulièrement connu, est constitué d'un empilement tri-couches PP-PE-PP dans lequel la couche intermédiaire en PE joue un rôle de fusible thermique. Par conséquent, lorsque la température dépasse la température de fusion du PE (~135°C), ce polymère fond puis diffuse dans la porosité des deux couches de PP. Ceci entraîne un blocage complet et irréversible de la diffusion des ions $Li^+$ et empêche l'utilisation de l'accumulateur.

L'électrolyte est en général un mélange de solvants organiques, par exemple des carbonates dans lesquels est ajouté un sel de lithium typiquement $LiPF_6$.

L'électrode positive ou cathode 2 est constituée de matériaux d'insertion du cation Lithium qui sont en général composite, comme le phosphate de fer lithié $LiFePO_4$, l'oxyde de cobalt lithié $LiCoO_2$, l'oxyde manganèse lithié, éven-

tuellement substitué, $LiMn_2O_4$ ou un matériau à base de $LiNi_xMn_yCo_zO_2$ avec x+y+z = 1, tel que $LiNi_{0.33}Mn_{0.33}Co_{0.33}O_2$, ou un matériau à base de $LiNi_xCo_yAl_zO_2$ avec x+y+z = 1, $LiMn_2O_4$, ou l'oxyde de nickel cobalt aluminium lithié.

L'électrode négative ou anode 3 est très souvent constituée de carbone, graphite ou en $Li_4Ti_5O_{12}$ (matériau titanate), éventuellement également à base de silicium ou à base de lithium, ou à base de métaux tels que l'étain, l'antimoine et de leurs alliages ou de composite formé à base de silicium.

L'anode 3 et la cathode 2 en matériau d'insertion au Lithium peuvent être déposées selon une technique usuelle sous la forme d'une couche active sur une feuille métallique constituant un collecteur de courant.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement autour de 3,6 Volt.

Selon le type d'application visée, on cherche à réaliser soit un accumulateur lithium-ion fin et flexible, soit un accumulateur rigide : l'emballage est alors soit souple, soit rigide et constitue dans ce dernier cas en quelque sorte un boitier.

Les emballages souples sont usuellement fabriqués à partir d'un matériau composite multicouche constitué d'un empilement de couches d'aluminium recouvertes par un ou plusieurs film(s) en polymère laminés par collage.

La figure 3 illustre ce type d'emballage souple 6 qui est agencé pour contenir la cellule électrochimique C avec étanchéité tout en étant traversé par une partie 40, 50 de deux lamelles 4, 5 formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5. L'avantage principal des emballages souples est leur légèreté. Les accumulateurs Li-ion avec les plus grandes densités d'énergie comportent de ce fait un emballage souple.

Une batterie ou accumulateur Li-ion comporte un emballage rigide ou boitier lorsque les applications visées sont contraignantes où l'on cherche une longue durée de vie, avec par exemple des pressions à supporter bien supérieures et un niveau d'étanchéité requis plus strict, typiquement inférieure à $10^{-6}$ mbar.l/s d'hélium, ou dans des milieux à fortes contraintes comme le domaine aéronautique ou spatial. L'avantage principal des emballages rigides est ainsi leur étanchéité élevée et maintenue au cours du temps du fait que la fermeture des boitiers est réalisée par soudure, en générale par soudure au laser.

Aussi, à ce jour un emballage rigide utilisé est constitué d'un boitier métallique, de préférence en un métal léger et/ou peu coûteux, typiquement en acier inoxydable (inox 316L ou inox 304) ou en aluminium (Al 1050 ou Al 3003), ou encore en titane. En outre, l'aluminium est généralement préféré pour son coefficient de conductivité thermique élevé comme expliqué ci-après. Des boitiers réalisés en acier recouvert d'un revêtement bimétal en cuivre/nickel ont déjà été envisagés dans la demande de brevet WO 2010/113502.

Des boitiers en matière plastique rigide, en particulier intégralement en polymère ont également déjà été envisagés, en particulier dans la demande de brevet US 2010/316094. Bien que présentant une tenue mécanique importante, ces boitiers n'ont que peu de chances d'être viable économiquement en raison du prix de leur matériau constitutif.

Des boitiers en matériau mixte polymère/fibres ont été également envisagés.

L'avantage principal des emballages rigides est leur étanchéité élevée et maintenue au cours du temps du fait que la fermeture des boitiers est réalisée par soudure, en générale par soudure au laser.

La géométrie de la plupart des boitiers d'accumulateurs Li-ion est cylindrique, car la plupart des cellules électrochimiques des accumulateurs sont enroulées par bobinage selon une géométrie cylindrique autour d'un axe d'enroulement aussi dénommé usuellement mandrin. Des formes prismatiques de boitiers ont également déjà été réalisées avec enroulement autour d'un mandrin de forme prismatique.

Un des types de boitier rigide de forme cylindrique, usuellement fabriqué pour un accumulateur Li-ion de forte capacité et à durée de vie supérieure à 10 ans, est illustré en figure 4.

Le boitier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle. Le boitier 6 est au potentiel de la borne positive 40.

On a représenté en figure 5 une vue en coupe longitudinale d'un tel boitier 6 de géométrie axisymétrique autour de l'axe central 10 et logeant un faisceau électrochimique F de forme allongée et comportant une seule cellule électrochimique constituée d'une anode 3 et d'une cathode 2 de part et d'autre d'un séparateur 1 adapté pour être imprégné de l'électrolyte. La figure 5 montre le faisceau F obtenu de hauteur H et de diamètre D, usuellement par bobinage autour

d'un axe d'enroulement central 10 à l'intérieur du boitier cylindrique 6.

On a représenté schématiquement en figure 6, un accumulateur Li-ion d'architecture en empilement de cellules électrochimiques élémentaires comprenant chacune un séparateur imprégné d'un constituant électrolyte 1 intercalé entre une cathode 2 et une anode 3. Comme visible sur cette figure 6, les collecteurs de courant 4, 5 destinés à assurer la sortie du courant sont généralement agencés d'un même côté latéral de l'empilement. Cet empilement de forme prismatique est destiné à être logé dans une enveloppe latérale de forme parallélépipédique qui constitue une partie d'un boitier rigide également de forme prismatique.

Quel que soit le type d'emballage souple ou rigide par boitier envisagé à ce jour, la ou les cellules électrochimiques est (sont) de fait contenue(s) dans une enceinte complètement étanche vis-à-vis de l'extérieur.

Le fonctionnement d'un accumulateur ou batterie lithium-ion (Li-ion) repose sur le principe d'oxydo-réduction réversible des matériaux d'anode (électrode négative) et cathode (électrode positive) qui les composent par une insertion/désinsertion d'ions lithium en leur sein. Cette propriété permet à la batterie de stocker de l'énergie sous forme électrochimique.

Par exemple, au cours d'une charge, il se produit une désinsertion des ions lithium de la cathode avec leur insertion dans les mêmes quantités dans l'anode, et vice-et-versa au cours de la décharge. La quantité d'ions lithium utilisée au cours de ces processus d'insertion est directement proportionnelle à la capacité de l'accumulateur ou batterie.

Dans le cas particulier d'un accumulateur Li-ion à anode en graphite, du fait de son potentiel en fin de charge très bas, au-dessous de 500mV vs $Li^+/Li$, il est connu qu'une partie du lithium inséré à l'état échangeable est consommée au cours de la première charge de l'accumulateur, appelée « étape de formation ». Cela a pour effet d'entrainer la création d'un film de passivation (SEI, acronyme anglais pour « *Solid-Electrolyte-Interphase* »), et de consommer du lithium échangeable, c'est-à-dire apte à être inséré/désinséré. De ce fait, la capacité de l'accumulateur chute proportionnellement avec cette consommation de lithium.

On a représenté aux figures 7A et 7B, les courbes de potentiel des électrodes (cathode en haut et anode en bas) d'un accumulateur Li-ion en fonction de la capacité en lithium échangeable, respectivement à une capacité initiale correspondant à 100% de l'état de charge et à une capacité réduite correspondant à 100-x % de l'état de charge avec une perte de x% de charge à l'électrode négative générée par la consommation d'ions lithium échangeables.

Comme illustré en figure 7B comparativement à la figure 7A, les potentiels des matériaux actifs d'électrode ne sont plus capables d'atteindre les valeurs initiales des états de charge extrêmes de l'accumulateur (0 et 100%) par lithiation/délithiation en raison du manque d'ions lithium échangeables.

Autrement dit, du fait de la formation du film SEI, les électrodes ne sont utilisées que partiellement, comme schématisé en figure 7B par les courbes situées à gauche de l'axe des ordonnées qui représentent le potentiel non exploré par les électrodes au cours de l'utilisation de l'accumulateur. Ce mode de fonctionnement de l'accumulateur n'est donc pas optimal, puisqu'une partie fonctionnelle des matériaux ne prend pas part au stockage des ions. La capacité déployée par l'accumulateur ne représente plus que 100-X% de la capacité initiale en lithium échangeable.

Il est également connu que la formation de SEI peut se produire lentement au cours de l'utilisation de l'accumulateur. Ce phénomène se produit généralement sur l'anode à bas potentiel, lorsque l'accumulateur est complètement chargé. La figure 8B montre schématiquement la consommation de lithium échangeable, au cours d'une période de vieillissement de l'accumulateur chargé, due à la formation lente de SEI depuis la formation de SEI initiale de la figure 8A, qui correspond à la figure 7B.

Comme montré en figure 8C, la capacité restante et les potentiels des électrodes, sont à nouveau amoindris. La capacité de l'accumulateur est alors fonction de la part de lithium échangeable restant, à hauteur de 100-X-Y% de la quantité initiale.

De plus, ces pertes de capacité engendrées peuvent induire l'apparition d'autres phénomènes dégradants pour ces matériaux.

Dans le cas où les états de charges extrêmes ont des valeurs réduites de X+Y% du fait du manque d'ions lithium échangeables, le système électronique de gestion de la batterie (BMS) n'arrête pas les applications de courant suffisamment tôt, ce qui induit des surtensions sur les matériaux d'insertion actifs, ce qui entraîne leur dégradation. On rappelle ici que le BMS (acronyme anglais de « *Battery Management System* ») a notamment pour fonction d'arrêter les applications de courant dès l'atteinte de valeurs de tension seuil, i.e. une différence de potentiels entre les deux matériaux d'insertion actifs.

Le BMS stoppe donc les applications de courant (charge, décharge) dès l'atteinte de tensions (différence des potentiels des deux matériaux actifs) seuils. Or, les potentiels des matériaux actifs, non mesurables par le BMS, n'atteignent plus les valeurs seuils des états de charge initiaux extrêmes de l'accumulateur (0 et 100%) en raison du manque d'ions lithium échangeables. Les applications de courant ne sont pas stoppées assez tôt dans les états de charge extrême, ce qui induit également des surtensions sur les matériaux actifs, entrainant leurs dégradations structurales et chimiques.

Certains documents de l'état de l'art ont déjà identifiés le problème de perte de capacité des accumulateurs Li-Ion par le manque d'ions lithium échangeables. Les solutions proposées permettent de réinjecter des ions lithium

pour compenser ce manque.

Le brevet JP2012089471 propose d'insérer depuis l'extérieur d'un accumulateur Li-ion, à travers son emballage, un équipement, sous la forme d'une seringue, adaptée pour réinjecter des ions lithium $Li^+$. Plus précisément, la seringue comporte une chambre contenant un produit électrolyte lui-même en contact avec le tube d'injection qui permet d'avoir une continuité ionique entre le produit et les matériaux actifs de batterie par remplissage d'électrolyte. Le tube d'injection est conducteur électronique afin de permettre un échange d'électrons entre un matériau actif d'accumulateur et le composé réducteur. Ce dernier a un potentiel d'oxydo-réduction faible pour engendrer spontanément une réaction avec l'un des matériaux actifs des deux électrodes de l'accumulateur. Ainsi, par la mise en contact entre le matériau d'insertion actif de l'une des électrodes et le produit, il est possible de réinsérer des ions lithium dans les matériaux actifs, par conduction ionique et électronique. Cette solution nécessite une conception d'accumulateurs qui intégre un organe de pénétration du tube d'injection au travers de l'emballage. La fragilité de l'accumulateur est donc plus importante, le risque de fuite est non négligeable.

Les demandes de brevet WO201224211, EP2595235 et JP2011076930, proposent quant à elles d'intégrer dans un accumulateur Li-ion, une troisième électrode, c'est-à-dire une électrode supplémentaire à l'anode et la cathode d'une cellule électrochimique. La troisième électrode ainsi intégrée est adaptée pour contenir des ions lithium qu'il est possible d'extraire pour les injecter dans les matériaux d'insertion actifs de l'accumulateur. Cette opération est effectuée électrochimiquement, par l'application d'un courant entre cette troisième électrode et l'une choisie parmi l'anode ou la cathode de l'accumulateur. Cette solution nécessite donc l'ajout d'une électrode supplémentaire, ce qui a comme inconvénient d'ajouter du volume et du poids à l'accumulateur. Il est aussi nécessaire d'ajouter une troisième borne de sortie à l'architecture des accumulateurs reliée électriquement à la troisième électrode, afin d'appliquer le courant entre cette troisième électrode et celle dans laquelle les ions lithium sont réinjectés pour régénérer la capacité initiale. Cette troisième borne de sortie doit être nécessairement réalisée en formant une traversée, c'est-à-dire avec l'élément conducteur électrique isolé de la paroi de l'emballage, qui soit étanche. Cette solution présente donc l'inconvénient majeur de complexifier l'architecture des accumulateurs Li-ion.

La demande de brevet FR3017248 propose l'utilisation de l'emballage comme stockage d'ions métalliques au sein de l'accumulateur pour la régénération de la capacité. Si cette solution peut être satisfaisante dans bon nombre de cas, elle présente deux inconvénients majeurs. Le premier concerne l'homogénéité de relarguage des ions au sein des matériaux électrochimiquement actifs. En effet, les ions provenant de l'emballage pénètrent difficilement au coeur de l'accumulateur pendant la phase de régnération. Le second inconvénient concerne la tenue mécanique de l'emballage qui est fortement diminuée après la phase de relarguage, ce qui peut entrainer une rupture plus facile lorsque l'accumulateur est dans un environnement contraignant.

Pour pallier ces inconvénients, la déposante a proposé dans la demande de brevet déposée en France le 2 décembre 2015 sous le n° 15 61746, de réaliser le stockage des ions métal dans le mandrin autour duquel la cellule électrochimique est enroulée lors de la fabrication de l'accumulateur. Cette solution de régénération de capacité a pour avantage primordial de ne pas complexifier l'architecture de l'accumulateur et de ne pas perturber la tenue mécanique de l'emballage de l'accumulateur.

Cependant, bien que globalement satisfaisante, des problèmes d'homogénéisation de relargage d'ions peuvent se produire dans certaines configurations d'accumulateur.

Il existe donc un besoin d'améliorer encore les solutions existantes de régénération de la capacité d'un accumulateur métal-ion, tel qu'un accumulateur Li-ion, lorsque cela est diagnostiqué comme nécessaire notamment pour augmenter, à sa valeur initiale, la quantité de ions métal échangeable, tout en homogénéisant au mieux le relargage des ions depuis la zone de stockage, afin d'éviter l'apparition de surtensions dues au manque d'ions échangeable, et d'augmenter sa durée de vie.

Le but de l'invention est de répondre au moins en partie à ce besoin.

## Exposé de l'invention

Pour ce faire, l'invention a pour objet selon un premier de ses aspects, un accumulateur électrochimique métal-ion comme décrit dans la revendication 1.

Comme évoqué en préambule, la consommation d'ions métalliques dans une électrode (anode ou cathode) d'un accumulateur métal-ion génère un manque d'ions échangeables et provoque donc une perte de capacité et l'apparition de phénomènes de surtension entrainant un vieillissement des matériaux d'insertion de plus en plus évolutif au cours du temps.

La solution selon la présente invention permet de réinjecter des ions échangeables dans au moins un des matériaux actifs d'électrode depuis le séparateur, afin de régénérer la capacité perdue de l'accumulateur et d'éviter l'apparition de surtensions dégradantes des électrodes en fin de charge ou décharge.

La solution selon la présente invention met en oeuvre un stockage des ions-lithium dans un composant existant de l'accumulateur, à savoir le séparateur intercalé entre anode et cathode lors de la fabrication de l'accumulateur.

Ainsi, la solution de régénération de capacité selon la présente invention a pour avantages de ne pas complexifier l'architecture de l'accumulateur, de réinjecter de façon homogène les ions dans le(s) matériau(x) actif(s) de ou des électrodes pour la régénération de la capacité de l'accumulateur et ce sans avoir à garantir une tenue mécanique accrue.

En outre, par rapport à la solution de zone de stockage par le boitier comme décrit dans les demande de brevet FR3017248 et FR 15 61746 précitées, le fait de choisir le séparateur comme composant de régénération de la capacité, permet de répartir la surface de ce dernier sur toute la longueur des électrodes de l'accumulateur métal-ion. Cela permet avantageusement d'améliorer encore l'homogénéité de relargage des ions échangeables.

De plus, modifier la membrane séparatrice entre anode et cathode, pour lui conférer une fonction de stockage d'ions métal, n'affecte pas l'architecture bien éprouvée des accumulateurs métal-ion.

Ainsi, l'invention permet de s'affranchir de tout élément additionnel au système tout en conservant une architecture standard. Autrement dit, avec l'invention, un séparateur conserve avant tout la fonction usuelle d'isolation électrique totale des deux électrodes tout en assurant une conduction ionique entre elles, ce qui est nécessaire au fonctionnement de l'accumulateur. En outre, on confère une fonction additionnelle de stockage d'ions métalliques et donc de régénération de capacité.

Le séparateur étant réparti de façon homogène entre les deux électrodes, son utilisation comme source de relargage d'ions métalliques est bien adaptée à une régénération efficace de la capacité l'accumulateur.

De plus, la distance entre la source d'ions métallique et l'électrode ciblée est minimisée, ce qui permet une optimisation du temps de régénération et augmente encore son efficacité.

Le séparateur selon l'invention est en partie constitué d'un matériau de régénération permettant le stockage d'ions pour sa fonction de régénération. Le choix du matériau constituant le séparateur doit être également fait afin de lui garantir de conserver ces fonctions de conduction électronique et d'isolation électrique entre électrodes de l'accumulateur.

Ensuite, afin de permettre l'extraction des ions du matériau de régénération par l'imposition d'un courant pendant les phases de régénération, l'intégration du séparateur de régénération selon l'invention, doit être faite de sorte qu'on assure :

- une continuité électrique entre le matériau de régénération du séparateur et l'extérieur de l'accumulateur, par exemple au moyen d'une borne supplémentaire;
- aucun contact électrique direct entre le matériau de régénération du séparateur et les électrodes de l'accumulateur ;
- une conduction ionique entre le matériau de régénération du séparateur et les électrodes afin de permettre aux ions métalliques d'être réinjectés au sein de l'accumulateur dans une quantité d'ions qu'il est possible d'échanger. La conduction ionique doit aussi permettre l'échange réversible des ions métalliques lors des processus de charge / décharge classiques de l'accumulateur.

On prévoit selon l'invention d'intégrer une quantité d'ions métalliques apte à compenser le manque d'ions échangeables directement dans le séparateur avant l'assemblage final de l'accumulateur.

L'évaluation du manque d'ions échangeables et la modification du séparateur avec au moins une zone de stockage d'ions prévues selon l'invention permettent alors soit au BMS, soit à un opérateur de maintenance de l'accumulateur d'effectuer une délithiation du séparateur par l'application d'un courant électrique entre la cathode ou l'anode de l'accumulateur et le séparateur. Les ions extraits de leur zone de stockage dans le séparateur sont alors insérés dans le matériau d'insertion actif de l'accumulateur, ce qui permet de récupérer des ions échangeables. La capacité de l'accumulateur s'en trouve directement régénérée.

L'application du courant est de préférence réalisée avec régulation au moyen d'un dispositif électronique.

Le BMS ou l'opérateur pourront mettre en oeuvre la procédure décrite dans la demande de brevet déposée par la déposante, le 3 novembre 2016 sous le n° FR16 60615 et intitulée «*Procédé d'évaluation de la quantité d'ions perdue dans un accumulateur électrochimique métal-ion, afin de régénérer sa capacité, procédé de régénération associé*».

Le séparateur comprend un empilement des éléments suivants :

- deux membranes en un matériau isolant électrique et conducteur ionique, l'une des membranes étant en contact direct avec l'anode, l'autre des membranes étant en contact direct avec la cathode;
- une structure électriquement conductrice;
- au moins un composant de stockage d'ions métallique intégré à ou en contact direct avec la structure, la structure et le au moins un composant de stockage étant intercalé entre les deux membranes.

Selon une variante, la structure électriquement conductrice et le composant de stockage peuvent former un seul composant.

Alternativement, la structure électriquement conductrice est distincte du composant de stockage.

La structure électriquement conductrice peut être avantageusement une structure ouverte intégrant le composant de stockage.

Selon une variante avantageuse, la structure électriquement conductrice est recouverte sur au moins une, de préférence sur chacune, de ses faces principales d'une couche de stockage en matériau adapté pour insérer ou libérer des ions métalliques échangeables.

De préférence, la structure est choisie parmi une grille métallique, un film poreux ou feutre en composé organique ou en polymère conducteur électrique, une couche percolant électriquement de particules conductrices.

Avantageusement :

- le matériau métallique de la grille peut être choisi parmi le nickel (Ni), le cuivre (Cu), le lithium (Li), l'aluminium (Al) ;
- le polymère conducteur peut être choisi parmi le polypyrole, le polyaniline ou le polythiothène ;
- la couche percolante peut comporter des particules en carbone, en aluminium, en nickel en cuivre ou en silicium, de préférence de taille nanométrique.

Le composant peut être un matériau organique contenant au moins un groupement de complexation d'ions échangeables.

De préférence, l'épaisseur totale du séparateur est inférieure 100 $\mu$m, de préférence encore comprise entre 10 et 30 $\mu$m.

L'accumulateur peut comprendre une seule cellule enroulée sur elle-même par bobinage ou un empilement d'une pluralité de cellules, un séparateur comprenant un composant de stockage étant intercalé entre une anode d'une cellule et une cathode d'une cellule adjacente.

L'accumulateur selon l'invention peut être un accumulateur Lithium-ion, Sodium-ion, Magnésium-ion, ou Aluminium-ion.

Avantageusement, le matériau du composant de stockage est choisi parmi le silicium, un lithium métallique ou un matériau d'insertion du lithium, de préférence un oxyde de titane lithié ($Li_4Ti_5O_{12}$), du graphite, un oxyde mixte de métaux de transition, par exemple de formule $LiAlwNixMnyCozO_2$ avec w+x+y+z=1, un phosphate de fer lithié (LiFePO4), un oxyde mixte de cobalt-nickel-manganèse (LiNiMnCo ou NMC) ou encore un matériau organique contenant au moins un groupement de complexation d'ions lithium échangeables comprenant des quinones, ou des carboxylates.

Selon un mode de réalisation avantageux, pour un accumulateur Li-ion, le séparateur est une grille en lithium ou en un alliage silicium-lithium (LixSi), un alliage aluminium-lithium (LixAl), un alliage bismuth-lithium (LixBi), ou encore en un composé organique ou polymère dont la structure chimique est fonctionnalisée par des groupements contenant du lithium échangeable, de préférence un groupement 2,5-diénolate-1,4-benzènedicarboxylate de lithium.

L'invention a également pour objet selon un autre de ses aspects, un procédé de réalisation d'un séparateur d'un accumulateur électrochimique métal-ion (M-ion), comportant les étapes suivantes :

a/ réalisation d'un séparateur décrit précédemment;
b/ immersion du séparateur dans un bain électrolytique comprenant un sel du métal M concerné;
c/ imposition d'un courant entre le séparateur et une électrode métallique en métal M concerné de sorte à provoquer l'oxydation de cette dernière et l'introduction des ions métalliques du métal M concerné au sein de la membrane.

L'invention a également pour objet selon un autre de ses aspects, un procédé de réalisation d'un séparateur d'un accumulateur électrochimique métal-ion (M-ion), comportant les étapes suivantes :

a'/ réalisation d'un feutre par filage électrostatique à partir d'un ou plusieurs polymères sous une forme liquide, de préférence choisi parmi le polyacrylonitrile (PAN), l'alcool polyvynilique (PVA), le polychlorure de vinyle (PVC), le polyfluorure de vinylidène (PVdF), le polyvinylidene fluoride-co-hexafluoropropylene (PVdF-co-HFP), le polyméthacrylate de méthyle (PMMA), le polyvinyl phenol (PVP), l'acide polylactique (PLA), ou un mélange de ces polymères ;
b'/ application de conditions pour rendre le feutre conducteur électronique ;
c'/ insertion du métal M concerné au sein du feutre.

De préférenc, l'étape b'/ est réalisée soit par un traitement de pyrolyse du feutre obtenu selon l'étape a'/, soit par dispersion d'un ou plusieurs matériaux conducteurs électroniques dans le ou les polymères sous la forme liquide.

De préférence encore, l'étape c'/ est réalisée soit par dispersion de particules inorganiques de relargage d'ions métalliques dans le ou les polymères sous la forme liquide, soit par choix d'un polymère de relargage d'ions métallique en tant que polymère adapté pour subir un filage électrostatique selon l'étape a/, soit par mélange d'un polymère de relargage sous forme liquide avec un ou plusieurs polymères adapté pour subir un filage électrostatique selon l'étape a/.

L'invention a également pour objet selon un autre de ses aspects, un procédé de réalisation d'un séparateur d'un accumulateur électrochimique métal-ion (M-ion), comportant les étapes suivantes :

a"/ extrusion d'un film à partir d'un ou plusieurs polymères sous forme de poudre(s), de préférence choisi parmi le polyacrylonitrile (PAN), l'alcool polyvynilique (PVA), le polychlorure de vinyle (PVC), le polyfluorure de vinylidène (PVdF), le polyvinylidène fluoride-co-hexafluoropropylène (PVdF-co-HFP), le polyméthacrylate de méthyle (PMMA), le polyvinyle phénol (PVP), l'acide polylactique (PLA), ou un mélange de ces polymères;
b"/ étirement du film extrudé selon l'étape a/ selon une ou deux directions de sorte à le rendre poreux et ainsi le rendre conducteur ionique;
c"/ dépôt d'une couche du métal M concerné sur le film extrudé conducteur électronique.

Dans les modes de réalisation avantageux d'un accumulateur Li-ion, les définitions suivantes s'appliquent.
Par « anode ou cathode en matériau d'insertion au Lithium », on entend une électrode comportant au moins un matériau d'insertion au lithium et éventuellement, au moins un liant en polymère. Eventuellement, l'électrode peut comprendre en plus un conducteur électronique, par exemple des fibres de carbone ou du noir de carbone.
Par « matériau d'insertion au lithium », en particulier pour l'électrode positive, on entend un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule $LiM_y(XO_z)_n$ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des nombres positifs.
Par « matériau d'insertion au lithium », en particulier pour l'électrode négative, on entend également un matériau choisi parmi: oxyde de titane lithié ou non, par exemple $Li_4Ti_5O_{12}$ ou $TiO_2$. Plus particulièrement, le matériau d'électrode négative peut être choisi parmi les matériaux carbonés, les oxydes de titane non lithiés et leurs dérivés et les oxydes de titane lithiés tels que $Li_4Ti_5O_{12}$ et leurs dérivés et un mélange de ceux-ci.
Par « dérivé lithié », on entend des composés de formule $Li_{(4-x1)}M_{x1}Ti_5O_{12}$ et $Li_4Ti_{(5-y1)}N_{y1}O_{12}$, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.
Par « dérivé non lithié », on entend ici $Ti_{(5-y1)}N_{y1}O_{12}$, avec y1 compris entre 0 et 0,2 et N est un élément chimique choisi parmi Na, K, Mg, Nb, Al, Ni, Co, Zr, Cr, Mn, Fe, Cu, Zn, Si et Mo.
Selon une variante de réalisation, toutes les anodes sont en graphite et les cathodes en $LiFePO_4$.
L'électrolyte selon l'invention, peut être un liquide formé par un mélange de carbonate et au moins un sel de lithium. Par « sel de Lithium », on entend de préférence, un sel choisi parmi $LiPF_6$, $LiClO_4$, $LiBF_4$ et $LiAsF_6$.
Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate ($CF_3SO_3$), bis (trifluorométhanesulfonate imide [$(CF_3SO_2)_2N$] et tris(trifluorométhanesulfonate) méthide [$(CF_3SO_2)_3C$].

Description détaillée

D'autres avantages et caractéristiques ressortiront mieux à la lecture de la description détaillée, faite à titre illustratif en référence aux figures suivantes parmi lesquelles:

- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective et par transparence d'un accumulateur lithium-ion avec son emballage souple selon l'état de l'art ;
- la figure 4 est une vue en perspective d'un accumulateur lithium-ion cylindrique selon l'état de l'art avec son emballage rigide constitué d'un boitier ;
- la figure 5 est une vue en coupe longitudinale d'un accumulateur lithium-ion selon l'état de l'art, montrant le faisceau électrochimique constitué d'une seule cellule électrochimique enroulée sur elle-même par bobinage selon une géométrie cylindrique à l'intérieur du boitier;
- la figure 6 est une vue en perspective d'un accumulateur lithium-ion prismatique à empilement d'électrodes selon l'état de l'art;
- les figures 7A et 7B illustrent les courbes de potentiel des électrodes (cathode en haut et anode en bas) d'un accumulateur Li-ion en fonction de la capacité de lithium échangeable, respectivement au cours de la première charge à une capacité initiale correspondant à 100% de l'état de charge et après cette première charge, à une capacité réduite correspondant à 100-x % de l'état de charge avec une perte de x% de charge à l'électrode négative générée par le manque d'ions lithium échangeables consommés lors de la première charge dite étape de formation;

- les figures 8A à 8C illustrent les courbes de potentiel des électrodes (cathode en haut et anode en bas) d'un accumulateur Li-ion en fonction de la capacité de lithium échangeable;
- la figure 9 est une vue schématique en perspective éclatée montrant les différents éléments d'un accumulateur lithium-ion dont le séparateur selon l'invention;
- la figure 10 est une vue en perspective d'un exemple de réalisation d'un composant de stockage d'ions métallique, qui fait partie d'un séparateur selon l'invention ;
- la figure 11 est la structure chimique d'un composé organique comportant deux fonctions énolates du lithium qui peut être stockée en vue d'être échangé afin de régénérer la capacité d'un accumulateur Li-ion;
- la figure 12 est une vue schématique d'un appareil de filage électrostatique pour la réalisation d'un séparateur selon l'invention.

Par souci de clarté, les mêmes références désignant les mêmes éléments d'un accumulateur Li-ion selon l'état de l'art et selon l'invention sont utilisées pour toutes les figures 1 à 12.
On précise que les différents éléments selon l'invention sont représentés uniquement par souci de clarté et qu'ils ne sont pas à l'échelle.
Les figures 1 à 8C ont déjà été commentées en détail en préambule. Elles ne sont donc pas décrites ci-après.
Un accumulateur selon l'invention est représenté en figure 9. Il comporte au moins une cellule électrochimique C constituée d'un séparateur 1 imprégné d'un constituant électrolyte entre une cathode 2 et une anode 3, un collecteur de courant 4 connecté à la cathode 2, un collecteur de courant 5 connecté à l'anode 3.
La cellule C peut être unique et enroulée par bobinage autour d'un axe d'enroulement, ou mandrin 10 comme montré en figure 5. Un boitier, comme celui représenté en figures 4 et 5 loge alors la cellule enroulée. Ce boitier comporte une enveloppe latérale cylindrique 7, un fond 8 à une extrémité, un couvercle 9 à l'autre extrémité. Le couvercle 9 supporte les pôles ou bornes de sortie du courant. Chacune des bornes de sortie (pôles), 4, 5 passent à travers le couvercle 9 avec interposition d'un joint non représenté qui isole électriquement la borne positive respectivement négative du couvercle 9. Autrement dit, les deux bornes sont isolées électriquement du boitier 6.
L'accumulateur peut également comporter un empilement de cellules électrochimiques élémentaires comprenant chacune un séparateur imprégné d'un constituant électrolyte 1 intercalé entre une cathode 2 et une anode 3. L'accumulateur peut être réalisé comme illustré en figure 6. Les collecteurs de courant 4, 5 destinés à assurer la sortie du courant sont généralement agencés d'un même côté latéral de l'empilement. Cet empilement de forme prismatique est destiné à être logé dans une enveloppe latérale de forme parallélépipédique qui constitue une partie d'un boitier rigide également de forme prismatique.
Selon l'invention, au moins une partie du séparateur 1 constitue un composant de stockage d'ions lithium 12, 13, qui va permettre la régénération de l'accumulateur Li-ion. Le composant est désigné par la suite composant de régénération.
Plus précisément, dans le mode de la figure 9, le séparateur 1 comprend un empilement de deux membranes de séparation 11 en matériau conducteur ionique et isolant électrique et agencées de part et d'autre d'un composant de régénération 12, 13.
Les membranes de séparation 11 peuvent être réalisées comme usuellement à partir d'une membrane poreuse en polyoléfine, par exemple en polyéthylène (PE) ou en polypropylène(PP), ou constituée d'un empilement tri-couches PP-PE-PP.
Dans le mode illustré de la figure 9, le composant de régénération comprend une structure électriquement sous la forme d'une grille métallique 12 qui est en contact direct avec un composé de régénération 13 en tant que tel.
Une fois l'électrolyte ajouté au sein de l'accumulateur, la grille 12 du composant de régénération, est en contact ionique avec les matériaux actifs d'insertion du lithium des électrodes 2, 3, tout en maintenant intègre la conduction ionique entre ces mêmes matériaux 2, 3 et dans l'ensemble de l'accumulateur.
La grille métallique 12 peut être en nickel, cuivre, lithium, aluminium.
Le composé de régénération 13 en contact direct avec la grille 12 doit permettre une insertion et une désinsertion électrochimique de lithium réversible ou irréversible dans le cas de l'extraction du lithium. Ainsi, le composé 13 peut être en LFP, LTO, NMC, graphite, silicium, en matériaux organiques contenant au moins un groupement de complexation d'ions échangeables comprenant notamment des quinones, ou des carboxylates.
Un composant de régénération en silicium a des propriétés intéressantes telles que sa forte capacité, sa conduction électrique (une fois lithié ou dopé). Cependant, il n'est pas possible de le manipuler sous sa forme lithiée, il est donc nécessaire de le mettre en forme avant sa lithiation.
Le composé de régénération 13 peut constituer avec la grille 12 un seul et même composant. Ainsi, on peut utiliser une grille 12, 13 de lithium ou d'un alliage métal-lithium, tel qu'un alliage silicium-lithium ($Li_xSi$), aluminium-lithium ($Li_xAl$), bismuth-lithium ($Li_xBi$).
Dans tous ces développements, il est important de veiller à ce que la structure ne perturbe pas la conduction ionique entre les matériaux actifs de l'accumulateur métal-ion. Typiquement, on veille à ce que la taille des pores et la

porosité soient suffisantes. Il est aussi important de conserver une épaisseur totale compatible avec de bonnes performances, c'est-à-dire inférieure à 100 μm. Préférentiellement, l'épaisseur devra être inférieure à 50 μm et idéalement comprise entre 10 et 30 μm.

On a réalisé un exemple d'un accumulateur Li-ion selon l'invention à partir d'une géométrie cylindrique d'une cellule bobinée, de format standard 26650, c'est-à-dire avec un diamètre de 26 mm et une hauteur de 65 mm, et d'une capacité initiale d'environ 2,0 Ah.

Les matériaux d'électrodes sont du graphite pour l'anode 3 et en lithium phosphate de fer ($LiFePO_4$) pour la cathode 2.

La largeur des électrodes est de 5,5cm, pour une longueur de 90cm. La surface des électrodes est donc de 495cm$^2$. Bien que le séparateur 1 soit en excès géométrique par rapport aux deux électrodes 2, 3, sa surface utile, pour sa fonction de régénération, est celle qu'il a en commun avec les électrodes, soit égale à 495cm$^2$.

Avant la fabrication de l'accumulateur, il est nécessaire d'insérer dans le séparateur 1, 13, la quantité adéquate des ions lithium. Cette dernière correspond à la quantité de capacité que l'on décide de régénérer, à condition de respecter une limite de lithiation du matériau de régénération.

En connaissant la capacité initiale, on peut calculer la quantité d'ions lithium échangeables contenu dans l'accumulateur par le calcul suivant:

$$C*3600*M_{Li} / F.$$

Avec les valeurs respectives suivantes :

$M_{Li}$ = 6,94g/mol (masse molaire du lithium),
F = 96500C/mol ou A.S/mol (nombre de Faraday),
et C = 2,0Ah.
L'accumulateur contient une quantité d'ions lithium échangeables égale à 0,518 g.

Le composant de régénération 12, 13 mis en oeuvre est illustré en figure 10. Il est constitué d'une grille d'acier 12 recouverte d'une couche de lithium métallique 13. Cette couche de lithium 13 est déposée initialement lors de la conception du séparateur 1, i.e. avant son intégration dans l'accumulateur.

La grille d'acier 12 présente une épaisseur H1, avec une largeur de paroi de maille L et un espace P entre parois, définissant l'ouverture d'une maille. A titre d'exemple illustratif, H1 est égale à 4μm, L est égale à 12,4μm et P vaut 200μm. Avec ces valeurs, la grille 12 offre un espace ouvert important, de l'ordre de 88%, ce qui va permettre ne pas limiter la conduction ionique entre les électrodes 2, 3 de l'accumulateur.

Comme indiqué, la grille d'acier 12 est en recouvrement total de la surface des électrodes 2, 3, soit 495cm$^2$ dans l'exemple. La surface pleine des parois de la grille est alors de 59,4cm$^2$.

Avec cette valeur, pour atteindre les 0,052g de lithium nécessaire à la régénération de 10% de capacité de l'accumulateur, il est nécessaire de réaliser le dépôt d'une couche 13 de 0,00088g/cm$^2$ de lithium métallique sur la surface pleine de la grille 12. Cela revient donc à faire un dépôt d'une épaisseur H2 de 16,2μm, en prenant comme hypothèse de densité du lithium dLi égale à 0,534g/cm$^3$.

Avantageusement, chaque face principale de la grille 12 est revêtue d'une couche 13 de lithium. Cela permet d'obtenir une meilleure tenue mécanique et surtout un relargage d'ions $Li^+$ facilité, quelle que soit l'électrode (positive ou négative) à régénérer.

L'épaisseur de chaque membrane séparatrice 11 entre lesquelles la grille 12 revêtue de la couche 13 de lithium, est avantageusement la plus faible possible, de préférence de l'ordre de 12 μm, afin de minimiser l'épaisseur totale du séparateur 1. Avec les dimensions indiquées, au final, l'épaisseur totale du séparateur 1,11, 12, 13 selon l'invention peut être inférieure à 45 μm. Afin d'obtenir une meilleure tenue mécanique, on peut réaliser un colaminage des différentes strates de l'empilement du séparateur 1, à savoir membrane 11/grille 12 revêtue de couche(s) 13 de lithium/membrane 11. Ce colaminage est réalisé avant toute intégration du séparateur 1 dans l'accumulateur Li-ion.

En lieu et place d'une ou de deux couches de lithium métallique, on peut réaliser un composé organique de régénération 13 qui est déposé à la surface de la grille métallique 12. On a illustré en figure 11, une formule chimique avantageuse d'un tel composé organique comprenant deux fonctions énolates, du lithium à extraire. La formule chimique de ce composé est $C_8H_2Li_4O_6$ et sa masse moléculaire est de l'ordre de 221,86 g·mol$^{-1}$.

Dans l'exemple indiqué, pour une quantité de lithium échangeable de 0,0518g, on peut déterminer 0,0075 moles de lithium, soit 0,0037 moles de matériau du composé organique 13 nécessaire, compte tenu du fait que deux ions Li+ sont extractibles du composé $C_8H_2Li_4O_6$. A partir de la masse molaire de ce dernier, une quantité de 0,8312 g de ce matériau organique doit être déposée sur la surface pleine de la grille 12 de 59,4cm$^2$, ce qui correspond à un grammage de 13,9 mg/cm$^2$.

Une fois le séparateur 1 selon l'invention réalisé, l'accumulateur Li-ion est assemblé selon les mêmes techniques actuellement employées.

La première étape consiste en l'obtention du faisceau électrochimique.

Pour un accumulateur obtenu par bobinage d'une seule cellule, cette première étape consiste en l'enroulement des deux électrodes 2,3 avec le séparateur 1 entre elles. Le faisceau enroulé peut être tassé à ses extrémités afin d'obtenir des socles de soudage à des collecteurs de courant destinés chacun à être relié à une borne de sortie 4, 5 de l'accumulateur.

Pour une architecture d'accumulateur à empilement d'une pluralité de cellules, une feuille de séparateur 1 selon l'invention est intercalée entre chaque alternance d'électrodes 2, 3 de polarités inverses.

Ensuite le faisceau électrochimique obtenu, est logé dans son emballage souple ou rigide sous la forme d'un boitier 6.

Puis, afin d'obtenir des connexions étanches pour les deux bornes de sortie 4, 5 l'accumulateur ainsi que la borne de connexion au composant de régénération 13, en fonction du type d'emballage souhaité, souple ou rigide, on met en oeuvre les techniques respectivement de thermoscellage des constituants de l'emballage en matériau plastique ou du sertissage du couvercle métallique sur le reste du boitier.

Avant de réaliser l'étanchéité finale de l'accumulateur, celui-ci est rempli d'électrolyte, ce qui permet d'aboutir à un accumulateur électrochimiquement fonctionnel.

Lorsqu'on souhaite réaliser la régénération de capacité de l'accumulateur obtenu, on vient appliquer un courant entre une électrode reliée au composant de régénération 13 et une des électrodes.

Le courant appliqué lors de cette phase doit induire l'oxydation du composant de régénération 13 pour provoquer l'extraction des ions lithium de celui-ci et leur insertion dans l'une des électrodes de l'accumulateur.

La capacité initiale de l'accumulateur est alors régénérée.

Dans un exemple selon l'invention, il est possible de régénérer une quantité définie de la capacité de l'accumulateur Li-ion par l'insertion d'ions $Li^+$ dans la cathode 2. L'insertion d'ions $Li^+$ peut aussi se faire dans l'anode 3.

Ainsi, après avoir calculé la quantité de capacité à régénérer, on connecte alors électriquement le composant 12, 13 du séparateur 1 selon l'invention et la cathode 2 à un dispositif électronique non représenté adapté pour réguler le courant. En effet, comme le potentiel d'oxydo-réduction de l'électrode positive de lithium phosphate de fer (supérieur à environ 2V *vs* $Li^+$/Li) est supérieur à celui de l'aluminium lithié (supérieur à environ 0,360V *vs* $Li^+$/Li), et que l'architecture permet un échange ionique entre ces deux composants, un courant négatif va s'établir aboutissant au phénomène voulu de réinjection de lithium échangeable.

Le dispositif électronique permet la régulation d'un courant entre le séparateur 1 et la cathode 2.

Avantageusement, ce dispositif peut aussi intégrer le courant en fonction du temps, afin de calculer la capacité de régénération.

Ce dispositif peut être intégré au BMS, ou piloté par un opérateur extérieur désirant effectuer la régénération de l'accumulateur.

Le courant limité est calculé par rapport à la surface du composant de régénération 13 du séparateur. Afin de ne pas appliquer de densité de courant trop importante, on limite à 2mA/Cm2 de surface du composant de régénération.

Dès l'atteinte de la quantité de lithium à insérer obtenue, 0,0518g de lithium dans l'exemple précédent, un cycle de charge/décharge de l'accumulateur peut être réalisé afin de vérifier que la régénération est effective.

Pour réaliser le composant de régénération 13 en contact direct avec ou intégré à la structure électriquement conductrice 12 du séparateur 1 selon l'invention, plusieurs modes de réalisation distincts peuvent être envisagés.

Dans un mode, certains des composants de régénération 13 nécessitent une étape de remplissage des sites de stockages d'ions échangeables. En effet, les matériaux tels que le graphite, le silicium, le bismuth, l'aluminium, ne sont pas commercialement disponibles, voire même difficilement manipulables, lorsqu'ils contiennent du lithium.

Il est donc nécessaire de concevoir le séparateur de régénération 1 avec une première phase d'obtention d'une membrane poreuse 11, en matériau conducteur ionique et isolant électrique, comme usuellement. Cette membrane 11 peut être de préférence en polyoléfine (polyéthylène (PE) ou polypropylène (PP)) ou un empilement tri-couches PP-PE-PP.

Puis une étape d'ajout électrochimique qui permettra l'insertion du lithium dans le matériau de la membrane poreuse est nécessaire. Pour ce faire, on immerge la membrane poreuse 11 dans un bain électrolytique au sel de lithium, tel que $LiPF_6$, LITFSI, $LiCLO_4$, $LiBF_4$, LiBOB, typiquement dans une concentration d'environ 1mol/l.

Ensuite, une imposition de courant entre le séparateur 1 et une électrode de lithium métal conduit à l'oxydation de cette dernière puis l'insertion de lithium dans ladite membrane. Le courant est de préférence imposé avec une densité de courant surfacique limitée à environ maximum $2mA/cm^2$ par rapport à la surface de la membrane poreuse, cette valeur étant ajustable en fonction respectivement de la forte ou faible résistance du séparateur de régénération.

En lieu et place d'une grille métallique, on peut aussi réaliser un composant à structure très ouverte, de type feutre, par une technique dite de filage électrostatique, connue également sous le terme anglo-saxon « électrospinning ».

Cette technique d'électrospinning est un procédé de mise en oeuvre des polymères permettant l'élaboration

de membranes non-tissées nanofibreuses, typiquement de diamètre de fibres de l'ordre de 50 nm à 1 μm, à partir de solutions de polymères ou de polymères à l'état fondu.

Un équipement mettant en oeuvre cette technique d'électrospinning pour la réalisation d'un feutre de régénération 1 selon l'invention est montré en figure 12.

Une seringue, de préférence en verre, 14 est remplie d'un ou plusieurs polymères P sous une forme liquide, i.e. à l'état fondu, dissous dans un solvant ou un mélange de solvants. La seringue 14 comprend une pointe d'extraction du liquide 16, de type à capillaire. De préférence, le polymère est choisi parmi le polyacrylonitrile (PAN), l'alcool polyvynilique (PVA), le polychlorure de vinyle (PVC), le polyfluorure de vinylidène (PVdF), le polyvinylidène fluoride-co-hexafluoropropylène (PVdF-co-HFP), le polyméthacrylate de méthyle (PMMA), le polyvinyle phénol (PVP), l'acide polylactique (PLA), ou un mélange de ces polymères.

Un champ électrique délivré par une source haute tension 15 est alors appliqué entre le fluide polymère P, à charge opposée, qui remplit la seringue 15 à pointe capillaire et un écran de collecte métallique 17 relié à la masse. Combiné à une poussée du piston de la seringue 15, ce champ électrique induit l'écoulement d'un jet de polymère 18 sur l'écran 17 à mesure que le solvant s'évapore. Les fibres éjectées sont alors recueillies sur l'écran 17. Il se forme ainsi un enchevêtrement de nano fibres sous la forme d'un feutre.

Le ou les polymères du feutre 1 lui assurent une certaine tenue mécanique qui permet de le décoller de l'écran 17 et de le manipuler.

Deux variantes peuvent être envisagées pour rendre le feutre conducteur électronique.

La première consiste à faire subir au feutre 1 obtenu un traitement thermique de pyrolyse sous gaz inerte feutre. Après ce traitement, la tenue mécanique peut être affectée.

Dans le cas où le feutre est trop fragile pour être manipulé, en particulier après ce traitement thermique, il est possible de le déposer directement sur un support ayant les propriétés recherchées de tenue mécanique, conductivité ionique et isolation électronique). Par exemple, on peut le déposer directement sur une membrane poreuse de séparation classique.

La conductivité électronique peut aussi être obtenue en dispersant des matériaux conducteurs électroniques, comme le carbone, dans le fluide polymère. On veille à ce que la quantité de matériaux conducteurs électroniques soit suffisamment élevée pour atteindre le seuil de percolation électronique, rendant le feutre conducteur électronique.

Une fois le feutre rendu conducteur électronique, il est possible d'insérer en son sein du lithium métallique.

La source de lithium métallique peut également être inclue en amont, i.e. avant la réalisation de la technique d'électrospinning.

Une première voie peut alors consister à disperser des particules inorganiques de relargage d'ions métalliques, sous leur forme lithiée ou non, dans le fluide polymère P qui remplit la seringue 14, avec ou sans ajout de conducteur électronique.

Une autre voie peut consister à ajouter un polymère de relargage, lithié ou non lithié, dans le fluide polymère P de remplissage de la seringue 14. Si le polymère de relargage est filmogène et conducteur électronique, on peut même envisager de l'utiliser en tant que polymère unique dans le fluide polymère.

Par exemple, les polymères conducteurs fonctionnalisés qu'on peut envisager peuvent avoir comme formule générale :

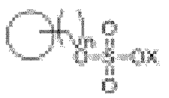

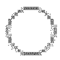 Polymère conducteur (polypyrrole, polythiophène, polyaniline...)

$Q_{th,irr} \leq 160$ mAh/g
X = Li, Na, Ca, Mg...

Des polymères conducteurs à base de thiophène, de formules suivantes peuvent également convenir:

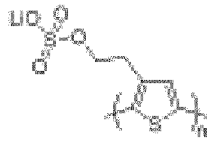

$Q_{th,irr} = 125$ mAh/g

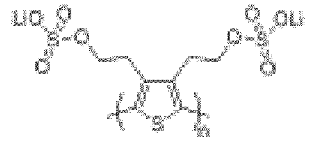

$Q_{th,irr} = 156$ mAh/g

Des conducteurs à base d'aniline de formule suivante peuvent aussi convenir:

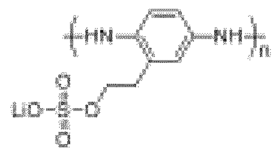

$Q_{th,irr}$ = 113 mAh/g

Le feutre finalement obtenu constitue une structure unique 12, 13 agencée par la suite entre deux membranes de séparation poreuses 11 connues, afin de constituer le séparateur 1 selon l'invention.

Comparativement à une grille métallique, le feutre obtenu a l'avantage de pouvoir être plus fin, plus facilement intégrable et d'avoir une surface spécifique plus élevée. De plus, le masquage des électrodes est limité puisque les fils du feutre ont un diamètre beaucoup plus faible que les parois d'une grille, ce qui entraine un fonctionnement plus homogène de l'accumulateur lors de ses cycles de charge/décharge et/ou lors du processus de régénération (partielle ou totale).

D'autre part, en fonction du matériau utilisé, le feutre peut être lui-même la source de lithium sans étape de lithiation postérieure, comme mentionné précédemment.

On peut également mettre en oeuvre une technique d'extrusion pour obtenir un composant à structure poreuse constitué d'un matériau polymère dans lequel la source d'ions lithium est intégrée.

La filière d'une machine d'extrusion, de préférence de type à double vis avec une zone d'alimentation contrôlée par un doseur gravimétrique, peut avoir une forme qui donne la forme finale du composant de séparation recherché dans le cadre de l'invention.

Ce composant sous la forme d'un film en sortie de filière est ensuite étiré dans une ou deux directions pour obtenir la porosité finale nécessaire à l'établissement de la conduction ionique entre les électrodes d'un accumulateur.

Pour faciliter l'encapsulation de l'électrode de relargage, le film de séparation extrudé peut subir avantageusement un colaminage à chaud de part et d'autre d'une des électrodes de l'accumulateur.

Dans le cas où on réalise un séparateur selon l'invention par extrusion, on peut aussi envisager de mélanger en amont de l'extrusion le polymère d'extrusion avec un polymère de relargage d'ions, sous forme de poudres ou granulés.

L'invention n'est pas limitée aux exemples qui viennent d'être décrits ; on peut notamment combiner entre elles des caractéristiques des exemples illustrés au sein de variantes non illustrées.

Bien que décrite en référence à un accumulateur Li-ion, l'invention peut tout aussi bien s'appliquer à tout générateur électrochimique métal-ion fonctionnant sur le principe d'insertion-désinsertion d'ions métallique.

## Revendications

1. Accumulateur (A) électrochimique métal-ion, tel qu'un accumulateur Li-ion, comportant au moins une cellule électrochimique C comportant, une cathode (2), une anode (3) et un séparateur (1, 11, 12, 13), imprégné d'un électrolyte, entre l'anode et la cathode, le séparateur comprenant un empilement des éléments suivants :

    - deux membranes (11) en un matériau isolant électrique et conducteur ionique, l'une des membranes étant en contact direct avec l'anode, l'autre des membranes étant en contact direct avec la cathode;
    - une structure électriquement conductrice (12);
    - au moins un composant (13) de stockage d'ions métallique intégré à ou en contact direct avec la structure, la structure et le au moins un composant de stockage étant intercalé entre les deux membranes.

2. Accumulateur selon la revendication 1, la structure électriquement conductrice (12) et le composant de stockage (13) formant un seul composant.

3. Accumulateur selon la revendication 1, la structure électriquement conductrice (12) étant distincte du composant de stockage (13), et de préférence une structure ouverte intégrant le composant de stockage, et de préférence recouverte sur au moins une, de préférence sur chacune, de ses faces principales d'une couche de stockage en matériau adapté pour insérer ou libérer des ions métalliques échangeables.

4. Accumulateur (A) métal-ion selon l'une des revendications 1 à 3, la structure étant choisie parmi une grille métallique, un film poreux ou feutre en composé organique ou en polymère conducteur électrique, une couche percolant électriquement de particules conductrices, le matériau métallique de la grille étant de préférence choisi parmi le nickel (Ni), le cuivre (Cu), le lithium (Li), l'aluminium (Al), le polymère conducteur étant de préférence choisi parmi

le polypyrole, le polyaniline ou le polythiothène, la couche percolante comportant de préférence des particules en carbone, en aluminium, en nickel en cuivre ou en silicium, de préférence de taille nanométrique.

**5.** Accumulateur (A) métal-ion selon l'une des revendications précédentes, le composant étant un matériau organique contenant au moins un groupement de complexation d'ions échangeables.

**6.** Accumulateur (A) métal-ion selon l'une des revendications précédentes, l'épaisseur totale du séparateur étant inférieure 100 μm, de préférence comprise entre 10 et 30 μm.

**7.** Accumulateur (A) métal-ion selon l'une des revendications précédentes, comprenant une seule cellule enroulée sur elle-même par bobinage.

**8.** Accumulateur (A) métal-ion selon l'une des revendications précédentes, comprenant un empilement d'une pluralité de cellules, un séparateur comprenant un composant de stockage étant intercalé entre une anode d'une cellule et une cathode d'une cellule adjacente.

**9.** Accumulateur (A) métal-ion selon l'une des revendications précédentes, étant un accumulateur Lithium-ion, Sodium-ion, Magnésium-ion, ou Aluminium-ion, le matériau du composant de stockage étant de préférence choisi parmi le silicium, un lithium métallique ou un matériau d'insertion du lithium, de préférence un oxyde de titane lithié ($Li_4Ti_5O_{12}$), du graphite, un oxyde mixte de métaux de transition, par exemple de formule $LiAl_wNi_xMn_yCo_zO_2$ avec w+x+y+z=1, un phosphate de fer lithié ($LiFePO_4$), un oxyde mixte de cobalt-nickel-manganèse (LiNiMnCo ou NMC) ou encore un matériau organique contenant au moins un groupement de complexation d'ions lithium échangeables comprenant des quinones, ou des carboxylates.

**10.** Accumulateur Li-ion selon la revendication 9 en combinaison avec la revendication 3, le séparateur étant une grille en lithium ou en un alliage silicium-lithium (LixSi), un alliage aluminium-lithium (LixAl), un alliage bismuth-lithium (LixBi), ou encore en un composé organique ou polymère dont la structure chimique est fonctionnalisée par des groupements contenant du lithium échangeable, de préférence un groupement 2,5-diénolate-1,4-benzènedicarboxylate de lithium.

**11.** Procédé de réalisation d'un séparateur d'un accumulateur électrochimique métal-ion (M-ion), comportant les étapes suivantes :

a/ réalisation d'un séparateur selon l'une des revendications précédentes;
b/ immersion du séparateur dans un bain électrolytique comprenant un sel du métal M concerné;
c/ imposition d'un courant entre le séparateur et une électrode métallique en métal M concerné de sorte à provoquer l'oxydation de cette dernière et l'introduction des ions métalliques du métal M concerné au sein de la membrane.

**12.** Procédé de réalisation d'un séparateur d'un accumulateur électrochimique métal-ion (M-ion), comportant les étapes suivantes :

a'/ réalisation d'un feutre par filage électrostatique à partir d'un ou plusieurs polymères sous une forme liquide, de préférence choisi parmi le polyacrylonitrile (PAN), l'alcool polyvynilique (PVA), le polychlorure de vinyle (PVC), le polyfluorure de vinylidène (PVdF), le polyvinylidene fluoride-co-hexafluoropropylene (PVdF-co-HFP), le polyméthacrylate de méthyle (PMMA), le polyvinyl phenol (PVP), l'acide polylactique (PLA), ou un mélange de ces polymères ;
b'/ application de conditions pour rendre le feutre conducteur électronique ;
c'/ insertion du métal M concerné au sein du feutre.

**13.** Procédé de réalisation d'un séparateur selon la revendication 12, l'étape b'/ étant réalisée soit par un traitement de pyrolyse du feutre obtenu selon l'étape a'/, soit par dispersion d'un ou plusieurs matériaux conducteurs électroniques dans le ou les polymères sous la forme liquide.

**14.** Procédé de réalisation d'un séparateur selon la revendication 12 ou 13, l'étape c'/ étant réalisée soit par dispersion de particules inorganiques de relargage d'ions métalliques dans le ou les polymères sous la forme liquide, soit par choix d'un polymère de relargage d'ions métallique en tant que polymère adapté pour subir un filage électrostatique selon l'étape a/, soit par mélange d'un polymère de relargage sous forme liquide avec un ou plusieurs polymères

adapté pour subir un filage électrostatique selon l'étape a/.

**15.** Procédé de réalisation d'un séparateur d'un accumulateur électrochimique métal-ion (M-ion), comportant les étapes suivantes :

a"/ extrusion d'un film à partir d'un ou plusieurs polymères sous forme de poudre(s), de préférence choisi parmi le polyacrylonitrile (PAN), l'alcool polyvynilique (PVA), le polychlorure de vinyle (PVC), le polyfluorure de vinylidène (PVdF), le polyvinylidène fluoride-co-hexafluoropropylène (PVdF-co-HFP), le poly méthacrylate de méthyle (PMMA), le polyvinyle phénol (PVP), l'acide polylactique (PLA), ou un mélange de ces polymères;
b"/ étirement du film extrudé selon l'étape a/ selon une ou deux directions de sorte à le rendre poreux et ainsi le rendre conducteur ionique;
c"/ dépôt d'une couche du métal M concerné sur le film extrudé conducteur électronique.

## Patentansprüche

**1.** Elektrochemischer Metallionen-Akkumulator (A), beispielsweise ein Li-Ionen-Akkumulator, der mindestens eine elektrochemische Zelle C aufweist, die eine Kathode (2), eine Anode (3) und einen mit einem Elektrolyten getränkten Separator (1, 11, 12, 13) zwischen der Anode und der Kathode aufweist, wobei der Separator einen Stapel aus folgenden Elementen umfasst:

- zwei Membranen (11) aus einem elektrisch isolierenden und ionenleitenden Material, wobei eine der Membranen die Anode direkt berührt, die andere der Membranen die Kathode direkt berührt;
- eine elektrisch leitfähige Struktur (12);
- mindestens einen Bestandteil (13) zum Speichern von Metallionen, der in die Struktur integriert ist oder sie direkt berührt, wobei die Struktur und der mindestens eine Speicherbestandteil zwischen den beiden Membranen angeordnet sind.

**2.** Akkumulator nach Anspruch 1, wobei die elektrisch leitfähige Struktur (12) und der Speicherbestandteil (13) einen einzigen Bestandteil bilden.

**3.** Akkumulator nach Anspruch 1, wobei die elektrisch leitfähige Struktur (12) vom Speicherbestandteil (13) verschieden ist und vorzugsweise eine offene Struktur ist, in der der Speicherbestandteil aufgenommen ist, und vorzugsweise auf mindestens einer, vorzugsweise jeder, ihrer Hauptflächen mit einer Speicherschicht aus einem Material überzogen ist, das zum Einlagern oder Abgeben von austauschbaren Metallionen geeignet ist.

**4.** Metallionen-Akkumulator (A) nach einem der Ansprüche 1 bis 3, wobei die Struktur ausgewählt ist aus einem Metallgitter, einer porösen Folie oder einem Filz aus einer organischen Verbindung oder einem elektrisch leitfähigen Polymer, einer Schicht zur elektrischen Perkolation aus leitfähigen Teilchen, wobei der Metallwerkstoff des Gitters vorzugsweise ausgewählt ist aus Nickel (Ni), Kupfer (Cu), Lithium (Li), Aluminium (Al), das leitfähige Polymer vorzugsweise ausgewählt ist aus Polypyrrol, Polyanilin oder Polythiophen, die Perkolationsschicht vorzugsweise Kohlenstoff-, Aluminium-, Nickel-, Kupfer- oder Siliciumteilchen aufweist, die vorzugsweise nanoskalig sind.

**5.** Metallionen-Akkumulator (A) nach einem der vorhergehenden Ansprüche, wobei der Bestandteil ein organisches Material ist, das mindestens eine Gruppe zur Komplexierung austauschbarer Ionen enthält.

**6.** Metallionen-Akkumulator (A) nach einem der vorhergehenden Ansprüche, wobei die Gesamthöhe des Separators unter 100 $\mu$m, vorzugsweise zwischen 10 und 30 $\mu$m liegt.

**7.** Metallionen-Akkumulator (A) nach einem der vorhergehenden Ansprüche, der eine einzelne Zelle umfasst, die durch Wickeln aufgerollt ist.

**8.** Metallionen-Akkumulator (A) nach einem der vorhergehenden Ansprüche, der einen Stapel aus einer Vielzahl von Zellen umfasst, wobei ein Separator, der einen Speicherbestandteil umfasst, zwischen einer Anode einer Zelle und einer Kathode einer benachbarten Zelle angeordnet ist.

**9.** Metallionen-Akkumulator (A) nach einem der vorhergehenden Ansprüche, der ein Lithium-Ionen-, Natrium-Ionen-, Magnesium-Ionen- oder Aluminium-Ionen-Akkumulator ist, wobei das Material des Speicherbestandteils vorzugsweise ausgewählt ist aus Silicium, einem metallischen Lithium oder einem Lithiumeinlagerungsmaterial, vorzugsweise einem Lithiumtitanspinell ($Li_4Ti_5O_{12}$), Graphit, einem Übergangsmetall-Mischoxid, beispielsweise mit der Formel $LiAl_wNi_xMn_yCO_zO_2$ mit w+x+y+z=1, einem Lithium-Eisenphosphat ($LiFePO_4$), einem Cobalt-Nickel-Mangan-Mischoxid (LiNiMnCo oder NMC) oder auch einem organischen Material, das mindestens eine Gruppe zur Komplexierung von austauschbaren Lithiumionen enthält, umfassend Chinone oder Carboxylate.

**10.** Li-Ionen-Akkumulator nach Anspruch 9 in Verbindung mit Anspruch 3, wobei der Separator ein Gitter aus Lithium oder aus einer Silicium-Lithium-Legierung (LixSi), einer Aluminium-Lithium-Legierung (LixAl), einer Bismuth-Lithium-Legierung (LixBi) oder auch aus einer organischen Verbindung oder einem Polymer ist, deren bzw. dessen chemische Struktur mit Gruppen funktionalisiert ist, die austauschbares Lithium enthalten, vorzugsweise eine Lithium-2,5-dienolat-1,4-benzoldicarboxylat-Gruppe.

**11.** Verfahren zur Herstellung eines Separators eines elektrochemischen Metallionen-Akkumulators (M-Ionen-Akkumulator), das folgende Schritte umfasst:

a/ Herstellen eines Separators nach einem der vorhergehenden Ansprüche;
b/ Eintauchen des Separators in ein Elektrolytbad, das ein Salz des jeweiligen Metalls M umfasst;
c/ Einprägen eines Stroms zwischen dem Separator und einer Metallelektrode aus dem jeweiligen Metall M, damit die Oxidation letzterer und das Einbringen von Metallionen des jeweiligen Metalls M in die Membran bewirkt werden.

**12.** Verfahren zur Herstellung eines Separators eines elektrochemischen Metallionen-Akkumulators (M-Ionen-Akkumulator), das folgende Schritte umfasst:

a'/ Herstellung eines Filzes durch Elektrospinnen aus einem oder mehreren Polymeren in flüssiger Form, vorzugsweise ausgewählt aus Polyacrylonitril (PAN), Polyvinylalkohol (PVA), Polyvinylchlorid (PVC), Polyvinylidenfluorid (PVdF), Polyvinylidenfluorid-co-hexafluorpropylen (PVdF-co-HFP), Polymethylmethacrylat (PMMA), Polyvinylphenol (PVP), Polymilchsäure (PLA) oder einer Mischung aus diesen Polymeren;
b'/ Anwenden von Bedingungen, durch die der Filz elektronenleitend wird;
c'/ Einbringen des jeweiligen Metalls M in den Filz.

**13.** Verfahren zur Herstellung eines Separators nach Anspruch 12, wobei Schritt b'/ entweder durch eine Pyrolysebehandlung des gemäß Schritt a'/ erhaltenen Filzes oder durch Dispergieren von einem oder mehreren elektronenleitenden Materialien in dem oder den Polymeren in flüssiger Form durchgeführt wird.

**14.** Verfahren zur Herstellung eines Separators nach Anspruch 12 oder 13, wobei Schritt c'/ entweder durch Dispergieren von anorganischen Teilchen zur Freisetzung von Metallionen in dem oder den Polymeren in flüssiger Form oder durch Auswählen eines Polymers zur Freisetzung von Metallionen als zum Elektrospinnen gemäß Schritt a/ geeigneten Polymer oder durch Mischen eines Freisetzungspolymers in flüssiger Form mit einem oder mehreren zum Elektrospinnen gemäß Schritt a/ geeigneten Polymeren durchgeführt wird.

**15.** Verfahren zur Herstellung eines Separators eines elektrochemischen Metallionen-Akkumulators (M-Ionen-Akkumulator), das folgende Schritte umfasst:

a''/ Extrudieren einer Folie aus einem oder mehreren Polymeren in Pulverform, vorzugsweise ausgewählt aus Polyacrylonitril (PAN), Polyvinylalkohol (PVA), Polyvinylchlorid (PVC), Polyvinylidenfluorid (PVdF), Polyvinylidenfluorid-co-hexafluorpropylen (PVdF-co-HFP), Polymethylmethacrylat (PMMA), Polyvinylphenol (PVP), Polymilchsäure (PLA) oder einer Mischung aus diesen Polymeren;
b''/ Verstrecken der gemäß Schritt a/ extrudierten Folie in einer oder zwei Richtungen, damit sie porös und somit ionenleitend wird;
c''/ Aufbringen einer Schicht aus dem jeweiligen Metall M auf die elektronenleitende extrudierte Folie.

## Claims

**1.** Metal-ion electrochemical battery (A), such as a Li-ion battery, comprising at least one electrochemical cell C comprising, a cathode (2), an anode (3) and a separator (1, 11, 12, 13), impregnated with an electrolyte, between the anode and the cathode, the separator comprising a stack of the following elements:

- two membranes (11) made of an electrically insulating and ion-conducting material, one of the membranes being in direct contact with the anode, the other of the membranes being in direct contact with the cathode;
- an electrically conductive structure (12);
- at least one component (13) for storing metal ions that is incorporated into or is in direct contact with the structure, the structure and the at least one storage component being intercalated between the two membranes.

**2.** Battery according to Claim 1, the electrically conductive structure (12) and the storage component (13) forming a single component.

**3.** Battery according to Claim 1, the electrically conductive structure (12) being separate from the storage component (13), and preferably an open structure incorporating the storage component, and preferably covered on at least one, preferably on each, of its main faces with a storage layer made of a material suitable for inserting or releasing exchangeable metal ions.

**4.** Metal-ion battery (A) according to one of Claims 1 to 3, the structure being selected from a metal grid, a porous film or felt made of organic compound or of electrically conductive polymer, an electrically percolating layer of conductive particles, the metal material of the grid preferably being selected from nickel (Ni), copper (Cu), lithium (Li), aluminium (Al), the conductive polymer preferably being selected from polypyrrole, polyaniline or polythiothene, the percolating layer preferably comprising particles made of carbon, aluminium, nickel, copper or silicon, preferably of nanoscale size.

**5.** Metal-ion battery (A) according to one of the preceding claims, the component being an organic material containing at least one group for complexing exchangeable ions.

**6.** Metal-ion battery (A) according to one of the preceding claims, the total thickness of the separator being less than 100 $\mu$m, preferably between 10 and 30 $\mu$m.

**7.** Metal-ion battery (A) according to one of the preceding claims, comprising a single cell wound around itself by coiling.

**8.** Metal-ion battery (A) according to one of the preceding claims, comprising a stack of a plurality of cells, a separator comprising a storage component being intercalated between an anode of one cell and a cathode of an adjacent cell.

**9.** Metal-ion battery (A) according to one of the preceding claims, being a lithium-ion, sodium-ion, magnesium-ion or aluminium-ion battery, the material of the storage component preferably being selected from silicon, a lithium metal or a lithium insertion material, preferably a lithium titanium oxide ($Li_4Ti_5O_{12}$), graphite, a mixed oxide of transition metals, for example of formula $LiAl_wNi_xMn_yCO_zO_2$ with w+x+y+z=1, a lithium iron phosphate ($LiFePO_4$), a mixed oxide of cobalt-nickel-manganese (LiNiMnCo or NMC) or else an organic material containing at least one group for complexing exchangeable lithium ions comprising quinones, or carboxylates.

**10.** Li-ion battery according to Claim 9 in combination with Claim 3, the separator being a grid made of lithium or made of a silicon-lithium alloy ($Li_xSi$), an aluminium-lithium alloy ($Li_xAl$), a bismuth-lithium alloy ($Li_xBi$), or else made of an organic or polymer compound, the chemical structure of which is functionalized by groups containing exchangeable lithium, preferably a lithium 2,5-dienolate-1,4-benzenedicarboxylate group.

**11.** Process for producing a separator of a metal-ion (M-ion) electrochemical battery, comprising the following steps:

a/ producing a separator according to one of the preceding claims;
b/ immersing the separator in an electrolytic bath comprising a salt of the metal M in question;
c/ imposing a current between the separator and a metal electrode made of the metal M in question so as to bring about the oxidation of the latter and the introduction of the metal ions of the metal M in question in the membrane.

**12.** Process for producing a separator of a metal-ion (M-ion) electrochemical battery, comprising the following steps:

a'/ producing a felt by electrostatic spinning using one or more polymers in a liquid form, preferably selected from polyacrylonitrile (PAN), polyvinyl alcohol (PVA), polyvinyl chloride (PVC), polyvinylidene fluoride (PVdF), polyvinylidene fluoride-co-hexafluoropropylene (PVdF-co-HFP), polymethyl methacrylate (PMMA), polyvinyl phenol (PVP), polylactic acid (PLA), or a mixture of these polymers;

b'/ applying conditions in order to make the felt electron-conducting;
c'/ inserting the metal M in question in the felt.

**13.** Process for producing a separator according to Claim 12, step b'/ being carried out either by a pyrolysis treatment of the felt obtained according to step a'/, or by dispersion of one or more electron-conducting materials in the polymer(s) in liquid form.

**14.** Process for producing a separator according to Claim 12 or 13, step c'/ being carried out either by dispersion of metal-ion-releasing inorganic particles in the polymer(s) in liquid form, or by selecting a metal-ion-releasing polymer as polymer suitable for undergoing electrostatic spinning according to step a/, or by mixing a releasing polymer in liquid form with one or more polymers suitable for undergoing electrostatic spinning according to step a/.

**15.** Process for producing a separator of a metal-ion (M-ion) electrochemical battery, comprising the following steps:

a"/ extruding a film using one or more polymers in powder form, preferably selected from polyacrylonitrile (PAN), polyvinyl alcohol (PVA), polyvinyl chloride (PVC), polyvinylidene fluoride (PVdF), polyvinylidene fluoride-co-hexafluoropropylene (PVdF-co-HFP), polymethyl methacrylate (PMMA), polyvinyl phenol (PVP), polylactic acid (PLA), or a mixture of these polymers;
b"/ stretching the film extruded according to step a/ in one or two directions so as to make it porous and thus to make it ion-conducting;
c"/ depositing a layer of the metal M in question on the electron-conducting extruded film.

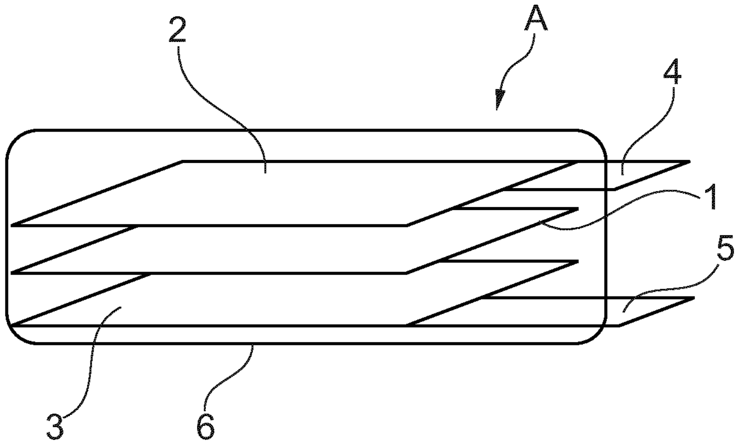


Fig. 1

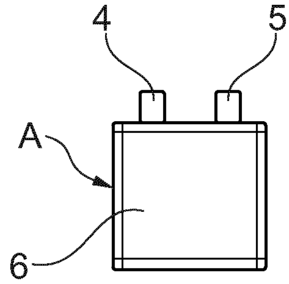


Fig. 2

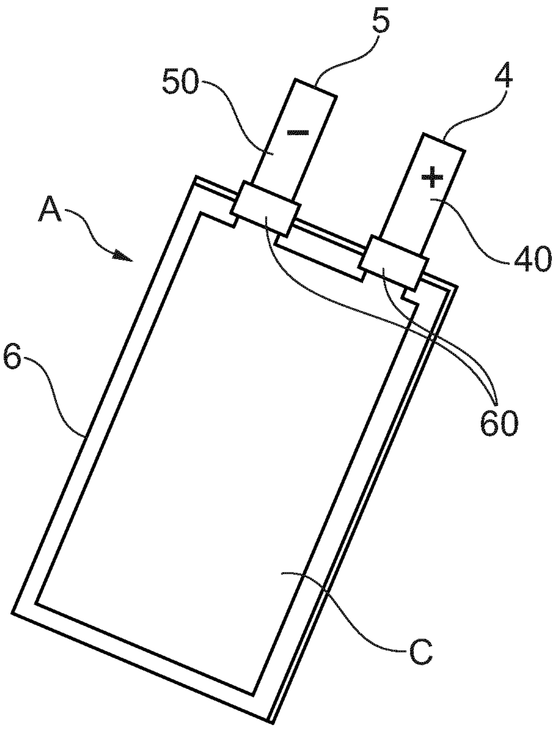


Fig. 3

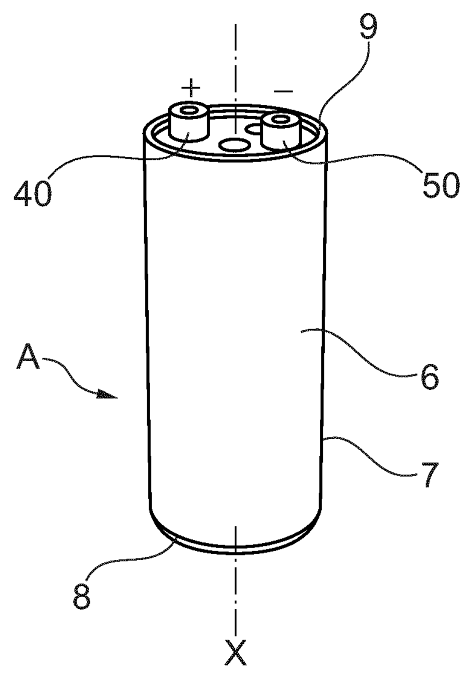


Fig. 4

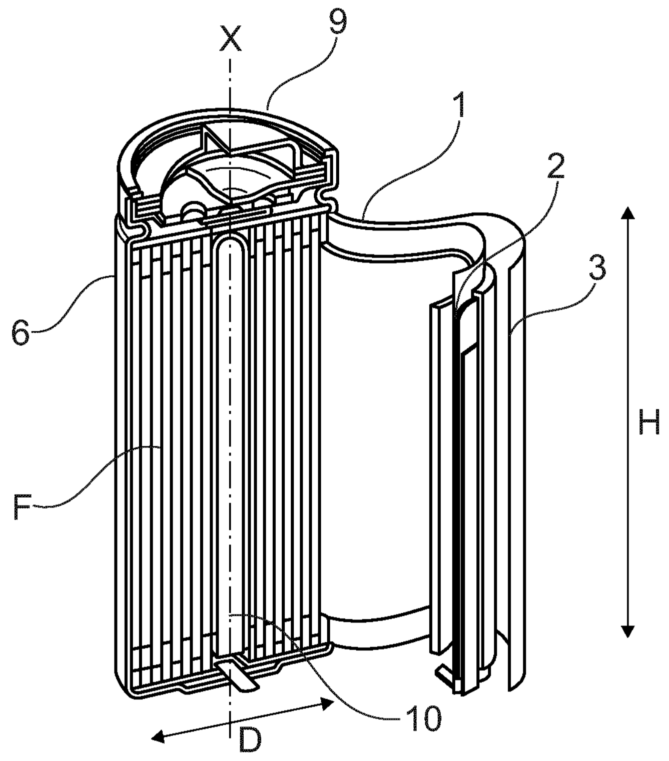


Fig. 5

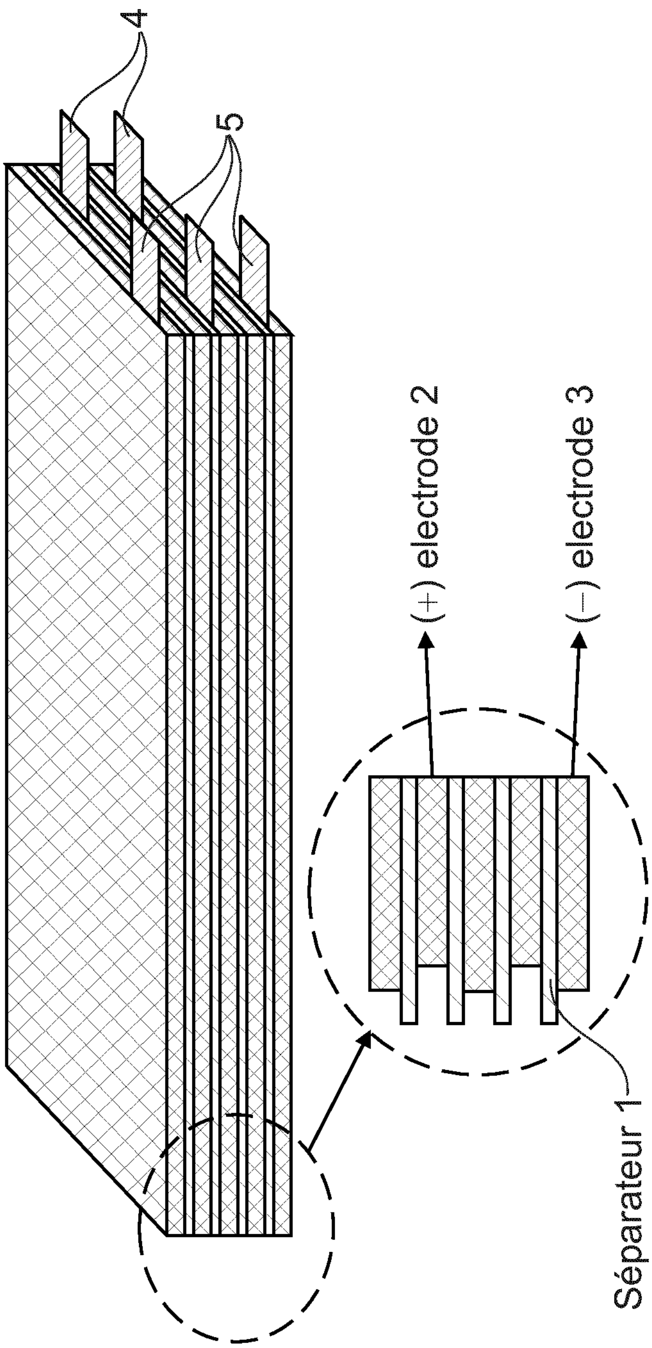


Fig. 6

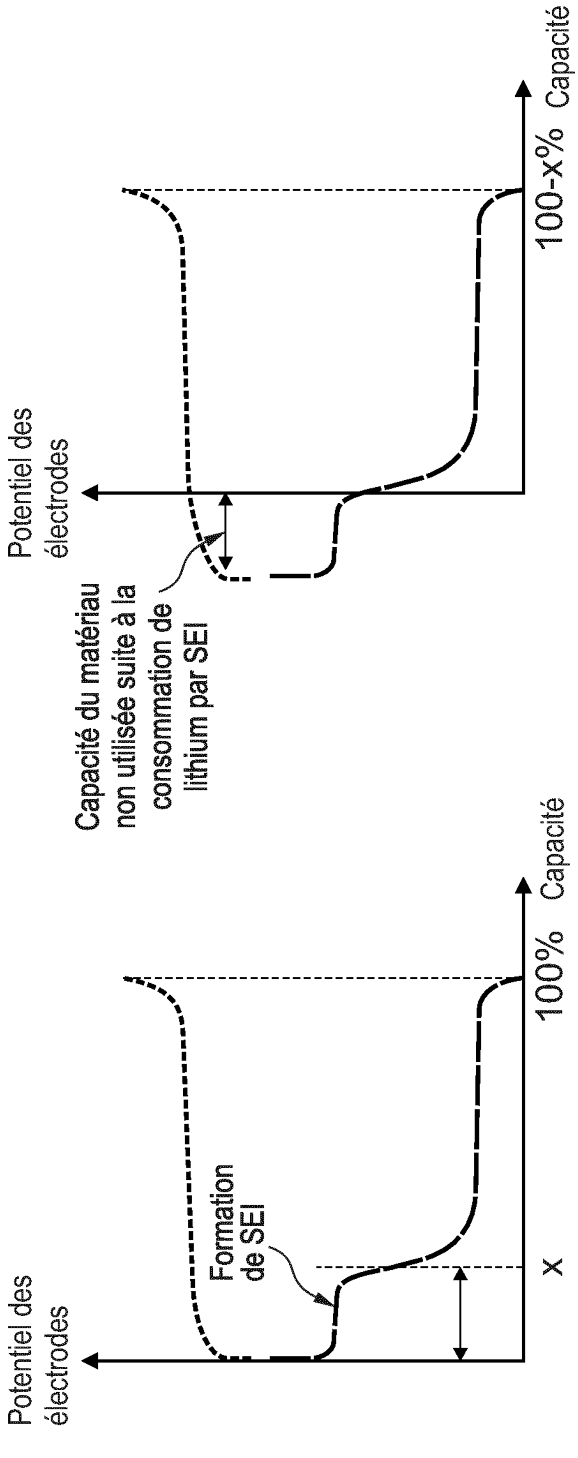


Fig. 7A

Fig. 7B

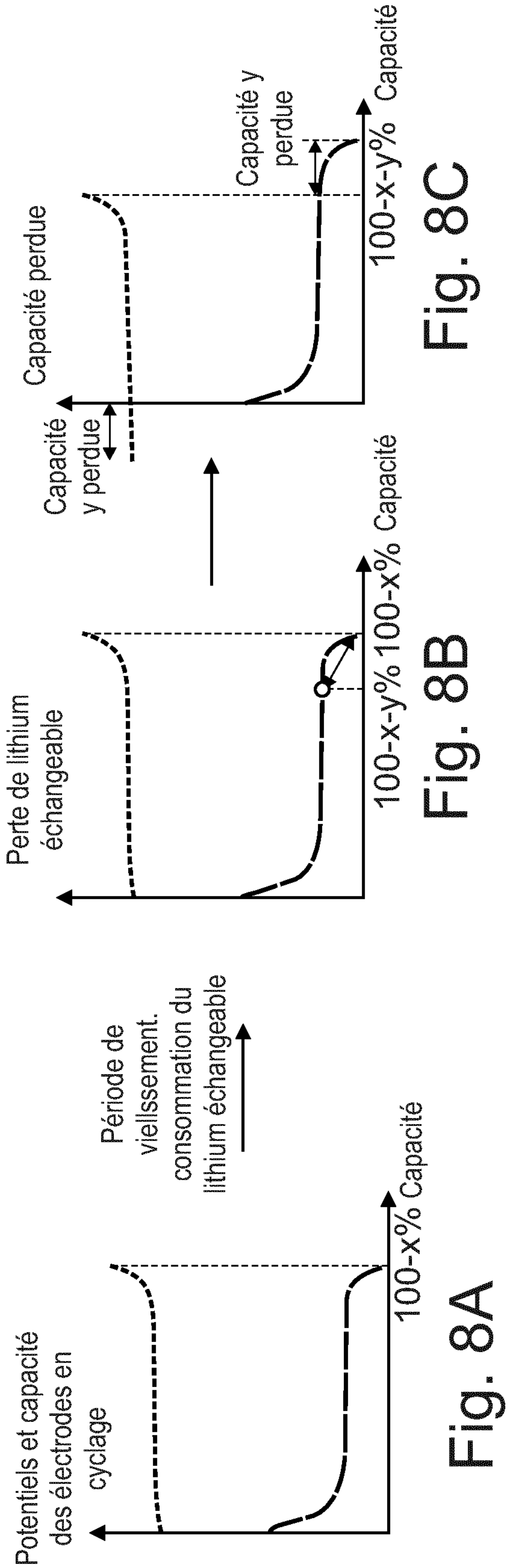


Fig. 8A

Fig. 8B

Fig. 8C

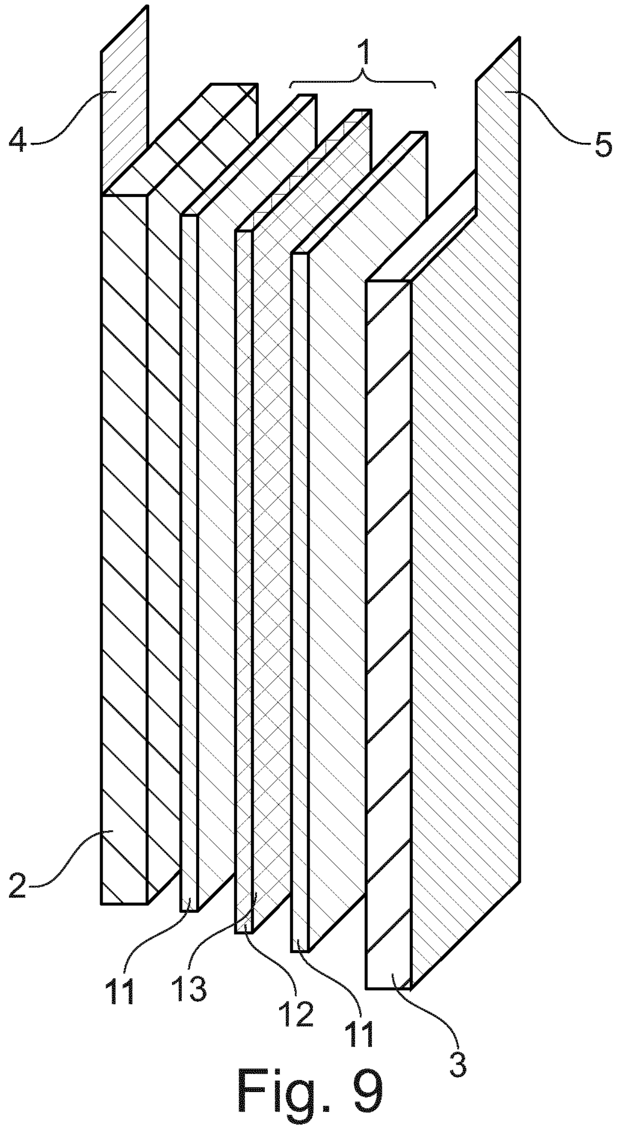


Fig. 9

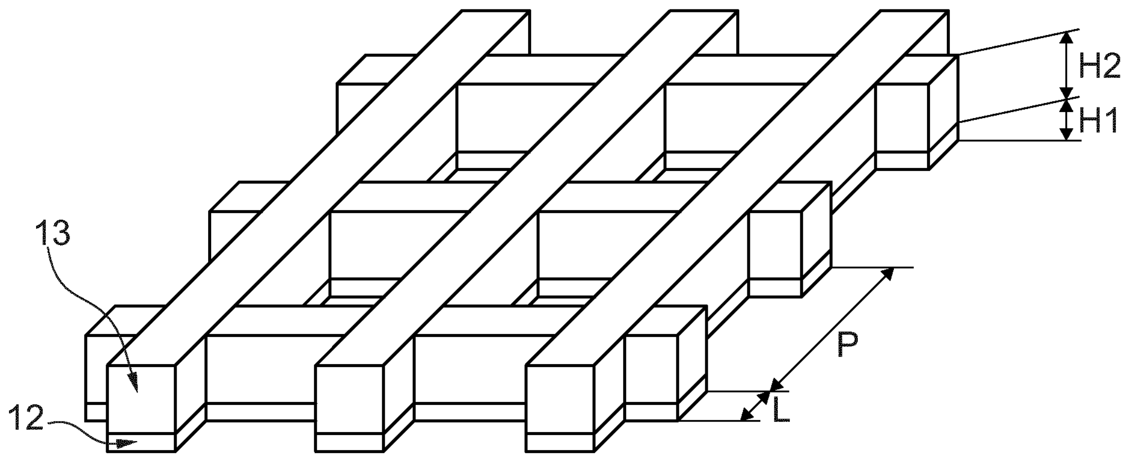


Fig. 10

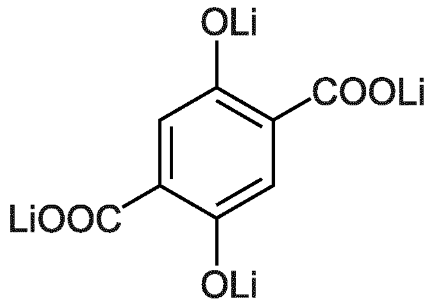

Fig. 11

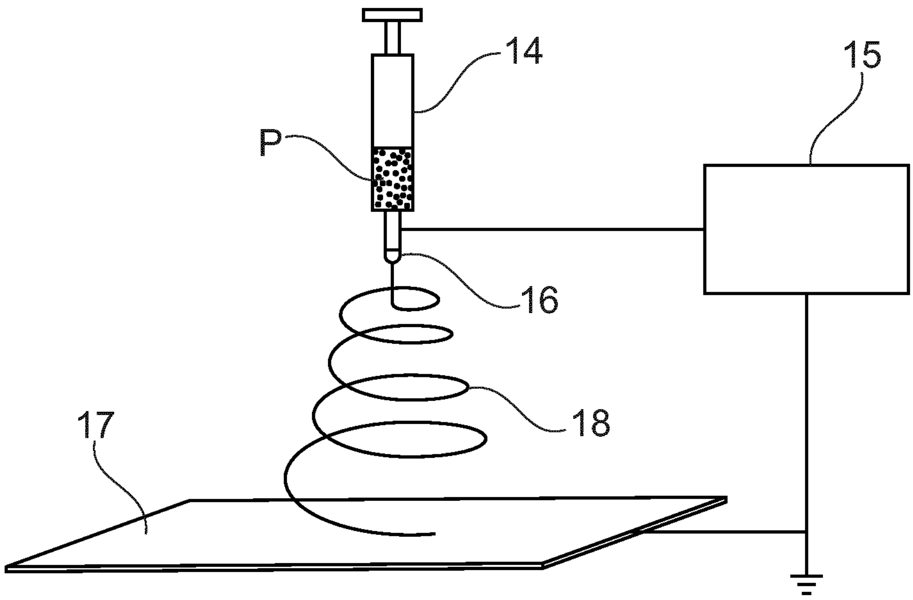


Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20060121348 A
- US 7348098 B
- US 7338733 B
- US 2008060189 A
- US 20080057392 A
- US 7335448 B
- WO 2010113502 A
- US 2010316094 A
- JP 2012089471 B
- WO 201224211 A
- EP 2595235 A
- JP 2011076930 B
- FR 3017248
- FR 1561746
- FR 1660615